# EUROPEAN PATENT APPLICATION

(11) **EP 4 589 712 A1**
(43) Date of publication of application: **23.07.2025**
(21) Application number: 22958909.8
(22) Date of filing: 14.11.2022
(51) Int. Cl.: H01M 10/0567, H01M 4/36, H01M 4/38, H01M 4/587, H01M 4/62, H01M 4/525, H01M 4/505, H01M 10/052

(54) **ELECTROLYTE ADDITIVE, ELECTROLYTE FOR LITHIUM SECONDARY BATTERY COMPRISING SAME, AND LITHIUM SECONDARY BATTERY**

(30) Priority: 16.09.2022 KR 20220117366
(71) Applicant: SAMSUNG SDI CO., LTD., Yongin-si, Gyeonggi-do 17084 (KR)
(72) Inventor: SHATUNOV, Pavel, Yongin-si, Gyeonggi-do 17084 (KR); YANG, Yeji, Yongin-si, Gyeonggi-do 17084 (KR); PARK, Sangwoo, Yongin-si, Gyeonggi-do 17084 (KR); KIM, Sundae, Yongin-si, Gyeonggi-do 17084 (KR); TSAY, Olga, Yongin-si, Gyeonggi-do 17084 (KR); CHOI, Hyunbong, Yongin-si, Gyeonggi-do 17084 (KR); PARK, Hongryeol, Yongin-si, Gyeonggi-do 17084 (KR); HWANG, Hyeonji, Yongin-si, Gyeonggi-do 17084 (KR); KIM, Dahyun, Yongin-si, Gyeonggi-do 17084 (KR)
(74) Representative: Gulde & Partner
(86) International application number: PCT/KR2022/017846
(87) International publication number: WO 2024/058307

(57) **Abstract**

Provided are an electrolyte additive represented by Chemical Formula 1 or Chemical Formula 2, and an electrolyte for a rechargeable lithium battery including the same.

Details regarding Chemical Formula 1 and Chemical Formula 2 are as described in the specification.

## Description

### [Technical Field]

This disclosure relates to an electrolyte additive, an electrolyte for a rechargeable lithium battery including the same, and a rechargeable lithium battery.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between negative and positive electrodes, in general, uses an organic solvent in which a lithium salt is dissolved, and is important in determining stability and performance of the rechargeable lithium battery.

The electrolyte is for example, prepared by adding a lithium salt such as LiPF₆, LiBF₄, LiFSI, and the like in a mixed solvent of high dielectric cyclic carbonate such as propylenecarbonate, ethylenecarbonate, and the like and chain carbonate such as diethylcarbonate, ethylmethylcarbonate, dimethylcarbonate, and the like. As development of batteries in various fields is activated, development of batteries with high output and high stability in a wide temperature range is considered to be important, and in addition, development of an electrolyte by optimally combining an organic solvent suppressing swelling, deterioration of capacity, and resistance increase with an additive to secure high power, long-term cycle-life characteristics, and high-temperature storage characteristics is important

### [Disclosure]

### [Technical Problem]

An embodiment provides an electrolyte additive having improved high-temperature characteristics.

Another embodiment provides an electrolyte for a rechargeable lithium battery including the additive.

Another embodiment provides a rechargeable lithium battery including the electrolyte.

### [Technical Solution]

An embodiment of the present invention provides an electrolyte additive represented by Chemical Formula 1 or Chemical Formula 2.

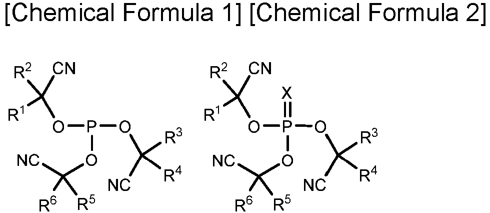

In Chemical Formula 1 and Chemical Formula 2,
X is O or S,
R¹ to R⁶ are each independently hydrogen, a cyano group, a halogen, a substituted or unsubstituted C1 to C10 alkyl group, or a substituted or unsubstituted C6 to C20 aryl group, and
at least one of R¹ and R², at least one of R³ and R⁴, and at least one of R⁵ and R⁶ is a substituted or unsubstituted C1 to C10 alkyl group, or a substituted or unsubstituted C6 to C20 aryl group.
R¹ or R², R³ or R⁴, and R⁵ or R⁶ may be a substituted or unsubstituted C1 to C10 alkyl group, or a substituted or unsubstituted C6 to C20 aryl group.
R¹ or R², R³ or R⁴, and R⁵ or R⁶ may be a substituted or unsubstituted C1 to C6 alkyl group.

The electrolyte additive may be one selected from the compounds listed in Group 1.

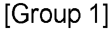

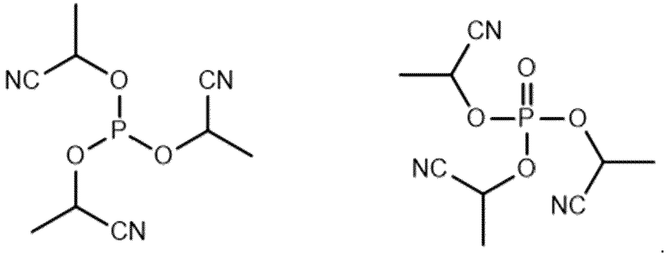

Another embodiment of the present invention provides an electrolyte for a rechargeable lithium battery including a non-aqueous organic solvent, a lithium salt, and the electrolyte additive.

The electrolyte additive may be included in an amount of 0.1 to 5.0 parts by weight based on 100 parts by weight of the electrolyte for a rechargeable lithium battery.

The electrolyte additive may be included in an amount of 0.1 to 2.0 parts by weight based on 100 parts by weight of the electrolyte for a rechargeable lithium battery.

The electrolyte for a rechargeable lithium battery may further include least one other additive selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

Another embodiment of the present invention provides a rechargeable lithium battery including a positive electrode including a positive electrode active material; a negative electrode including a negative electrode active material; and the aforementioned electrolyte for a rechargeable lithium battery.

The positive electrode active material may be represented by Chemical Formula 3.

[Chemical Formula 3] LiₓM¹_{y}M²_{z}M³_{1-y-z}O_{2±a}X_{b}

In Chemical Formula 3,
0.5≤x≤1.8, 0≤a≤0.1, 0≤b≤0.1, 0<y≤1, 0≤z≤1, 0<y+z≤1, M¹, M², and M³ each independently include at least one element selected from a metal of Ni, Co, Mn, Al, B, Ba, Ca, Ce, Cr, Fe, Mo, Nb, Si, Sr, Mg, Ti, V, W, Zr, or La, and a combination thereof, and X includes at least one element selected from F, S, P, or Cl.

In Chemical Formula 3, 0.8≤y≤1, 0≤z≤0.2, and M¹ may be Ni.

The negative electrode active material may include at least one of graphite and a Si composite.

The Si composite may include a core including Si-based particles and an amorphous carbon coating layer.

The Si-based particles may include at least one of Si particles, Si-C composites, SiOₓ (0 < x ≤ 2), and a Si alloy.

### [Advantageous Effects]

A rechargeable lithium battery is provided that suppresses an increase in battery resistance during high-temperature storage and implements excellent cycle-life characteristics.

### [Description of the Drawings]

FIG. 1 is a schematic view showing a rechargeable lithium battery according to an embodiment.
FIG. 2 is a graph showing the results of cyclic voltammetry (CV) of the negative electrode at room temperature of the electrolyte according to Example 1 and Comparative Example 1.
FIG. 3 is a graph showing the results of cyclic voltammetry (CV) of the negative electrode at room temperature of the electrolyte according to Example 2 and Comparative Example 1.
FIG. 4 is a graph showing the discharge capacity according to the cycle during high-temperature charge/discharge of the rechargeable lithium battery cells according to Preparation Examples 1 to 4 and Comparative Preparation Examples 1 to 3.
FIG. 5 is a graph showing capacity retention rates during high-temperature charge/discharge of the rechargeable lithium battery cells according to Preparation Examples 1 to 4 and Comparative Preparation Examples 1 to 3.
FIG. 6 is a graph showing the leakage current at high voltage measured for the rechargeable lithium battery cells according to Preparation Examples 1 to 4 and Comparative Preparation Example 1.

### <Description of Symbols>

100: rechargeable lithium battery
112: negative electrode
113: separator
114: positive electrode
120: battery case
140: sealing member

### [Best Mode]

Hereinafter, a rechargeable lithium battery according to an embodiment of the present invention will be described in detail with reference to the accompanying drawings. However, these embodiments are exemplary, and this disclosure is not limited thereto.

In the present specification, when a definition is not otherwise provided, "substituted" refers to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 trifluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

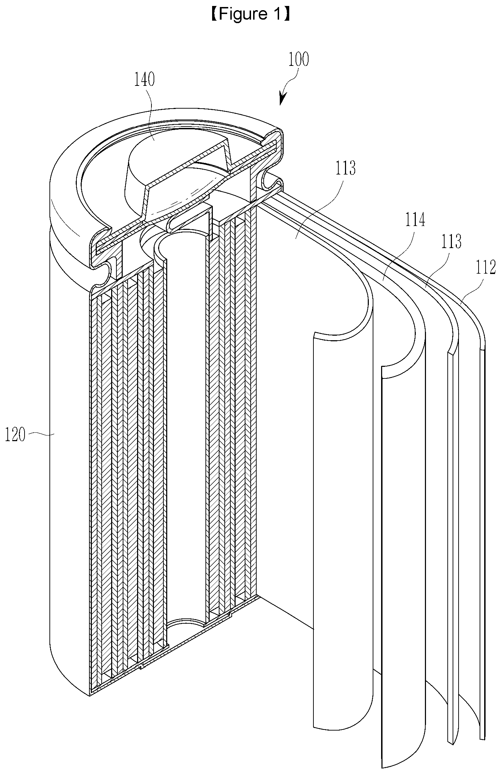

Herein, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, the negative electrode 112, and the separator 113, a battery case 120 housing the battery cell, and a sealing member 140 sealing the battery case 120.

Hereinafter, an electrolyte additive according to an embodiment will be described.

An additive according to an embodiment of the present invention is represented by Chemical Formula 1 or Chemical Formula 2.

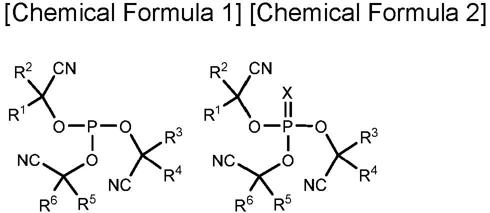

In Chemical Formula 1 and Chemical Formula 2,
X is O or S,
R¹ to R⁶ are each independently hydrogen, a cyano group, a halogen, a substituted or unsubstituted C1 to C10 alkyl group, or a substituted or unsubstituted C6 to C20 aryl group, and
at least one of R¹ and R², at least one of R³ and R⁴, and at least one of R⁶ and R⁶ is a substituted or unsubstituted C1 to C10 alkyl group, or a substituted or unsubstituted C6 to C20 aryl group.

For example, R¹ or R², R³ or R⁴, and R⁵ or R⁶ may be a substituted or unsubstituted C1 to C10 alkyl group, or a substituted or unsubstituted C6 to C20 aryl group.

As a specific example, R¹ or R², R³ or R⁴, and R⁵ or R⁶ may be a substituted or unsubstituted C1 to C10 alkyl group.

For example, R¹ or R², R³ or R⁴, and R⁵ or R⁶ may be a substituted or unsubstituted C1 to C6 alkyl group.

In an embodiment, Chemical Formula 1 or Chemical Formula 2 may be selected from the compounds listed in Group 1.

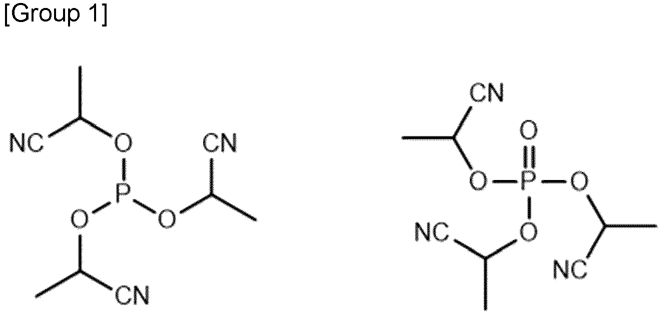

**The** additive represented by Chemical Formula 1 is reduced and decomposed before the carbonate solvent included in the non-aqueous organic solvent to form a solid electrolyte interface (SEI) film on the negative electrode, thereby preventing electrolyte decomposition and the resulting decomposition reaction of the electrode, and suppressing an increase in internal resistance due to gas generation.

In addition, it may contribute to improving high-temperature cycle-life characteristics by forming a film on the positive electrode surface and preventing decomposition of the positive electrode surface and oxidation reaction of the electrolyte.

That is, by including the additive, the cycle-life characteristics and high-temperature characteristics of the battery may be improved.

The electrolyte for a rechargeable lithium battery according to another embodiment includes a non-aqueous organic solvent, a lithium salt, and the aforementioned electrolyte additive.

The additive may be included in an amount of 0.1 to 5.0 parts by weight based on 100 parts by weight of the electrolyte for a rechargeable lithium battery.

The additive may be included in an amount of 0.1 to 2.0 parts by weight based on 100 parts by weight of the electrolyte for a rechargeable lithium battery.

When the content range of the additive is as described above, a rechargeable lithium battery with improved cycle-life characteristics and output characteristics can be implemented by preventing an increase in resistance at high temperatures.

The electrolyte for a rechargeable lithium battery may further include least one other additive selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

By further including the aforementioned other additives, cycle-life may be further improved or gas generated from the positive electrode and negative electrode during high-temperature storage may be effectively controlled.

The other additives may be included in an amount of 0.2 to 20 parts by weight, specifically 0.2 to 15 parts by weight, for example, 0.2 to 10 parts by weight, based on 100 parts by weight of the electrolyte for a rechargeable lithium battery.

When the content of other additives is as described above, battery performance may be improved by minimizing an increase in film resistance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R¹-CN (wherein R¹ is a hydrocarbon group having a C2 to C20 linear, branched, or cyclic structure and may include a double bond, an aromatic ring, or an ether bond), and the like, dioxolanes such as 1,3-dioxolane and the like, sulfolanes, and the like.

The non-aqueous organic solvents may be used alone or in combination of one or more, and when using one or more in combination, the mixing ratio may be appropriately adjusted depending on the desired battery performance, which is widely understood by those working in the relevant field.

The carbonate-based solvent is prepared by mixing a cyclic carbonate and a linear carbonate. When the cyclic carbonate and linear carbonate are mixed together in a volume ratio of 1:9 to 9:1, an electrolyte performance may be improved.

In particular, in an embodiment of the present invention, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

As a more specific example, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 2.

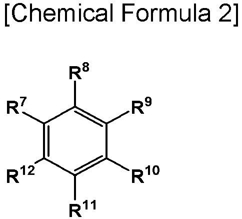

In Chemical Formula 2, R⁷ to R¹² are the same or different and are selected from hydrogen, a halogen, a C1 to C10 alkyl group, a C1 to C10 haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiN(SO₂C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein, x and y are integers ranging from 1 to 20, LiCl, Lil, LiB(C₂O₄)₂ (lithium bis(oxalato) borate: LiBOB), LiDFOB (lithium difluoro(oxalato)borate), and Li[PF₂(C₂O₄)₂] (lithium difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

Another embodiment provides a rechargeable lithium battery including a positive electrode including a positive electrode active material; a negative electrode including a negative electrode active material; and the aforementioned electrolyte.

The positive electrode includes a positive electrode current collector and a positive electrode active material layer on the positive electrode current collector, wherein the positive electrode active material layer includes a positive electrode active material.

As the positive electrode active material, a compound capable of intercalating and deintercalating lithium (lithiated intercalation compound) may be used.

Specifically, at least one compound oxide of lithium and a metal selected from cobalt, manganese, nickel, and combinations thereof may be used.

Of course, a part of the metal of the composite oxide may be replaced with a metal other than another metal, and the composite oxide may be at least one selected from a phosphate compound, for example, LiFePO₄, LiCoPO₄, and LiMnPO₄, and a composite oxide having a coating layer on the surface thereof may also be used, or a composite oxide and a composite oxide having a coating layer may be mixed and used. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound. For example, the method may include any coating method (e.g., spray coating, dipping, etc.), but is not illustrated in more detail since it is well-known to those skilled in the related field.

The positive electrode active material may be, for example, at least one of lithium composite oxides represented by Chemical Formula 3.

[Chemical Formula 3] LiₓM¹_{y}M²_{z}M³_{1-y-z}O_{2±a}X_{b}

In Chemical Formula 3,
0.5≤x≤1.8, 0≤a≤0.1, 0≤b≤0.1, 0<y≤1, 0≤z≤1, 0<y+z≤1, M¹, M², and M³ each independently include at least one element selected from a metal of Ni, Co, Mn, Al, B, Ba, Ca, Ce, Cr, Fe, Mo, Nb, Si, Sr, Mg, Ti, V, W, Zr, or La, and a combination thereof, and X includes at least one element selected from F, S, P, or Cl.

In an embodiment, the positive electrode active material may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1).

In Chemical Formula 3, 0.8≤y≤1, 0≤z≤0.2, and M¹ may be Ni.

For example, the positive electrode active material selected from LiNi_{b}Mn_{c}Co_{d}O₂ (b+c+d=1), LiNi_{b}Mn_{c}Co_{d}AlₑO₂ (b+c+d+e=1) and LiNi_{b}Co_{d}AlₑO₂ (b+d+e=1) may be a high nickel (high Ni)-based positive electrode active material.

For example, in the case of the LiNi_{b}Mn_{c}Co_{d}O₂ (b+c+d=1) and LiNi_{b}Mn_{c}Co_{d}AlₑO₂ (b+c+d+e=1), the nickel content may be 60% or more (b ≥ 0.6), and more specifically, 80% or more (b ≥ 0.8).

For example, in the case of the LiNi_{b}Co_{d}AlₑO₂ (b+d+e=1), the nickel content may be 60% or more (b ≥ 0.6), and more specifically, 80% or more (b ≥ 0.8).

A content of the positive electrode active material may be 90 wt% to 98 wt% based on a total weight of the positive electrode composition.

The content of the conductive agent and binder may be 1 wt% to 5 wt%, respectively, based on a total weight of the positive electrode composition.

The conductive material is used to provide conductivity to the positive electrode and any electrically conductive material may be used as a conductive material unless it causes a chemical change and examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, lithium metal, lithium metal alloy, material being capable of doping/dedoping lithium, or a transition metal oxide.

The material that reversibly intercalates/deintercalates lithium ions may include a carbon material. The carbon material may be any generally-used carbon-based negative electrode active material in a rechargeable lithium battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, a Si-C composite, SiOₓ (0 < x < 2), a Si-Q alloy wherein Q is an element selected from an alkali metal, an alkaline-earth metal, a Group 13 element, a Group 14 element excluding Si, a Group 15 element, a Group 16 element, a transition metal, a rare earth element, and a combination thereof, and not Si), Sn, SnO₂, a Sn-R¹¹ alloy (wherein R¹¹ is an element selected from an alkali metal, an alkaline-earth metal, a Group 13 element, a Group 14 element excluding Sn, a Group 15 element, a Group 16 element, a transition metal, a rare earth element, and a combination thereof , and not Sn), and the like. At least one of these materials may be mixed with SiO₂.

The elements Q and R¹¹ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In a specific embodiment, the negative electrode active material may include at least one of graphite and a Si composite.

The Si composite may include a core including Si-based particles and amorphous carbon layer, and for example, the Si-based particles may include at least one of Si particles, a Si-C composite, SiOx (0 < x ≤ 2), and a Si alloy.

For example, the core including the Si-based particles may include a pore at the central portion, the radius of the central portion corresponding to 30% to 50% of the radius of the core including the Si-based particles, the average particle diameter of the Si composite may be 5 µm to 20 µm, and the average particle diameter of the Si-based particles may be 10 nm to 200 nm.

In the present specification, the average particle diameter may be a particle size (D50) at 50% by volume in a cumulative size-distribution curve.

When the average particle diameter of the Si-based particle is within the above range, volume expansion occurring during charging and discharging may be suppressed, and a break in a conductive path due to particle crushing during charging and discharging may be prevented.

The Si composite 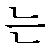 amorphous carbon may further include amorphous carbon, wherein the central portion does not include amorphous carbon, and the amorphous carbon may exist only in the surface portion of the Si composite.

At this time, the surface portion means an area from the outermost surface of the central portion to the outermost surface of the Si composite.

In addition, the Si-based particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or a combination thereof.

For example, the Si-C composite may include Si particles and crystalline carbon.

The Si particle may be included in an amount of 1 to 60 wt%, for example, 3 to 60 wt% based on the total weight of the Si-C composite.

The crystalline carbon may be, for example, graphite, and specifically may be natural graphite, artificial graphite, or a combination thereof.

An average particle diameter of the crystalline carbon may be 5 µm to 30 µm.

When the negative electrode active material includes both graphite and Si composite, the graphite and Si composite may be included in the form of a mixture, in which case the graphite and Si composite may be included in a weight ratio of 99:1 to 50:50.

More specifically, the graphite and Si composite may be included in a weight ratio of 97:3 to 80:20, or 95:5 to 80:20.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on the total weight of the negative electrode active material layer.

The rechargeable lithium battery may further include a separator between the negative electrode and the positive electrode, depending on a type of the battery. Such a separator may be a porous substrate; or composite porous substrates.

The porous substrate is a substrate that includes a pore through which lithium ions can move. The porous substrate may include for example a polyethylene separator, a polypropylene separator, polyvinylidene fluoride, and multi-layer separator thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

### [Mode for Invention]

Hereinafter, examples and comparative examples are described. These examples, however, are not in any sense to be interpreted as limiting the scope of the invention.

### (Synthesis Example: Synthesis of Additive)

### Synthesis Example 1: Synthesis of Tris(1-cyanoethyl)phosphite

The desired compound was synthesized in a yield of 76.4% by the method known in the document (Trudy Kazan. Khim. Tekhnol. Inst. im. S.M. Kirova (1957), 23, 161-6).

According to NMR and GCMS spectra, the product is a mixture of two inseparable isomers with identical mass spectra and a molar ratio of 13.5:86.5 (by 31P NMR).
1H NMR (400 MHz, acetone-d6, 25 °C): 5.28 (m, 3H), 1.67 (dd, 9H).
13C NMR (100 MHz, acetone-d6, 25 °C): 118.62 (m), 57.85 (m), 20.92 (m).
31P NMR (162 MHz, acetone-d6, 25 °C): 140.96 (s), 140.13 (s) (area ratio 13.5 : 86.5).
GC-MS (30m RTX-200 capillary column, temp. program of the oven: from 40 °C (3 min) to 300 °C at 10 °C /min, split ratio 50:1, injector 150 °C): retention time of 17.4 min (main isomer, peak area 81%), retention time of 18.1 min (minor isomer, peak area 19%).

### Synthesis Example 2: Synthesis of Tris(1-cyanoethyl)phosphate

The desired compound was synthesized in a yield of 92.3% by the method known in the literature (Trudy Kazan. Khim. Tekhnol. Inst. im. S.M. Kirova (1957), 23, 161-6).

According to NMR and GCMS spectra, the product is a mixture of two inseparable isomers with identical mass spectra and a molar ratio of 25:75 (by 31P NMR).
1H NMR (400 MHz, acetone-d6, 25 °C) 5.46 (m, 3H), 1.75 (m, 9H).
13C NMR (100 MHz, acetone-d6, 25 °C): 117.12 (m), 62.82 (m), 20.17 (m).
31P NMR (162 MHz, acetone-d6, 25 °C): -4.35 (s), -4.97 (s) (area ratio 25 : 75).
GC-MS (30m RTX-200 capillary column, temp. program of the oven: from 40 °C (3 min) to 300 °C at 10 °C /min, split ratio 50:1, injector 150 °C): retention time of 18.4 min (minor isomer, peak area 26%), retention time of 18.9 min (main isomer, peak area 74%).

### Comparative Synthesis Example: Synthesis of Tris(2-cyanoethyl)phosphate

Phosphorus oxychloride (15.33 g, 0.10 mol) in dry dioxane (133 mL) was added to a mixture of 3-hydroxypropionitrile (21.32 g, 0.30 mol) and pyridine (23.73 g, 0.30 mol) in dry dioxane (200 mL) in a dropwise fashion for 1 hour, while stirring and cooling. The obtained mixture was stirred for one day. Precipitates formed therein were filtered by suction with a glass filter and washed with a small amount of dry dioxane. The filtered and washed liquid was passed through an active alumina (80 mL) layer. The obtained colorless solution was distilled under a reduced pressure to obtain a colorless oil. The colorless oil was stirred under vacuum by heating to 80 °C to 85 °C until the residual 3-hydroxypropionitrile was removed (controlled by NMR). The dark colored oil was diluted with dry dioxane (80 mL) and passed through an alumina (80 mL) layer. A colorless solution obtained therefrom was distilled under a reduced pressure to obtain a colorless oil. The colorless oil was heated at 35 °C to 40 °C under vacuum for 15 hours, until the solvent was removed, to obtain a colorless and viscous liquid (12.14 g, 47.1%).

1H NMR (400 MHz, CDCl₃, 25 °C): 4.27 (m, 6H), 2.77 (td, J₁= 5.80 Hz, J₂'= 0.92 Hz, J₂"= 1.22 Hz, J₂‴= 0.92 Hz, 9H). 13C NMR (100 MHz, CDCl₃, 25 °C): 116.83 (s), 62.82 (d, J= 5.27 Hz), 19.76 (d, J= 7.19 Hz). 31P NMR (162 MHz, CDCl₃, 25 °C): -2.53 (s).

### (Example: Preparation of Electrolyte)

### Example 1

An electrolyte having the following composition was prepared.

### (Composition of Electrolyte)

Lithium salt: LiPF₆ 1.5 M
Non-aqueous organic solvent: ethylene carbonate: ethylmethyl carbonate: dimethylcarbonate (EC: EMC: DMC= volume ratio of 20:10:70)
Additive: 0.5 parts by weight of tris(1-cyanoethyl)phosphite represented by Chemical Formula 1a

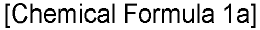

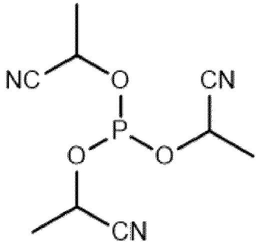

### Example 2

An electrolyte was prepared in the same manner as in Example 1 except that tris(1-cyanoethyl)phosphate represented by Chemical Formula 2a was used instead of the tris(1-cyanoethyl)phosphite represented by Chemical Formula 1a.

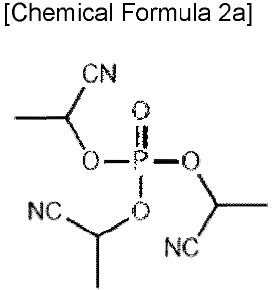

### Comparative Example 1

An electrolyte was prepared to have a composition excluding the tris(1-cyanoethyl)phosphite represented by Chemical Formula 1a.

### (Manufacturing example: Manufacturing of Rechargeable Lithium Battery Cells)

### Preparation Example 1

A positive electrode active material slurry was prepared by using LiNi_{0.88}Co_{0.07}Al_{0.05}O₂ as a positive electrode active material, polyvinylidene fluoride as a binder, and ketjen black as a conductive material in a weight ratio of 96:2:2 and dispersing the mixture in N-methyl pyrrolidone.

The positive electrode active material slurry was coated on a 14 µm-thick Al foil, dried at 100 °C, and pressed to manufacture a positive electrode.

A negative electrode active material was prepared by mixing artificial graphite and an Si-C composite in a weight ratio of 93:7, and then the negative electrode active material, a styrene-butadiene rubber binder as a binder, and carboxylmethyl cellulose as a thickener were mixed in a weight ratio of 97:1:2 and then, dispersed in distilled water to prepare a negative electrode active material slurry.

The Si-C composite was in a form of a core including artificial graphite and silicon particles and a coal-based pitch coated on the surface of the core.

The negative electrode active material slurry was coated on a 10 µm-thick Cu foil, dried at 100 °C, and pressed to manufacture a negative electrode.

An electrode assembly was manufactured by assembling the manufactured positive and negative electrodes, and a separator made of polyethylene having a thickness of 25 µm, and an electrolyte was injected to manufacture a rechargeable lithium battery cell.

The electrolyte has a following composition.

### (Composition of Electrolyte)

Salt: LiPF₆ 1.3 M
Solvent: ethylene carbonate: propylene carbonate: propylpropionate (EC: PC: PP= volume ratio of 10:15:75)
Additive: 0.5 parts by weight of tris(1-cyanoethyl)phosphite represented by Chemical Formula 1a, 7 parts by weight of fluoroethylene carbonate (FEC), 0.2 parts by weight of LiBF4, 1 part by weight of vinylethylene carbonate (VEC), and 3 parts by weight of propane sultone (PS).
(In the composition of the electrolyte, "parts by weight" means the relative weight of the additive based on 100 weight of the total electrolyte excluding the additive (lithium salt+non-aqueous organic solvent.)

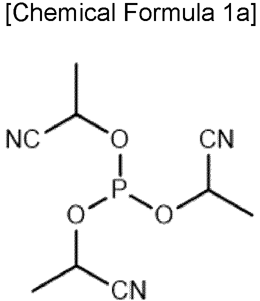

### Preparation Example 2

A rechargeable lithium battery cell was manufactured in the same manner as in Preparation Example 1 except that the tris(1-cyanoethyl)phosphite represented by Chemical Formula 1a was used in an amount of 1.0 parts by weight.

### Preparation Example 3

A rechargeable lithium battery cell was manufactured in the same manner as in Preparation Example 1 except that the tris(1-cyanoethyl)phosphate represented by Chemical Formula 2a was used instead of the tris(1-cyanoethyl)phosphite represented by Chemical Formula 1a.

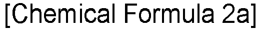

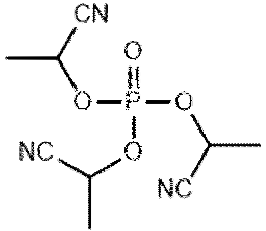

### Preparation Example 4

A rechargeable lithium battery cell was manufactured in the same manner as in Preparation Example 1 except that the tris(1-cyanoethyl)phosphate represented by Chemical Formula 2a was used in an amount of 1 part by weight.

### Comparative Preparation Example 1

A rechargeable lithium battery cell was manufactured to have a composition excluding the tris(1-cyanoethyl)phosphite represented by Chemical Formula 1a in the same manner as in Preparation Example 1.

### Comparative Preparation Example 2

A rechargeable lithium battery cell was manufactured in the same manner as in Preparation Example 1 except that tris(2-cyanoethyl)phosphate represented by Chemical Formula C1 according to the comparative synthesis example was used instead of the tris(1-cyanoethyl)phosphite represented by Chemical Formula 1a.

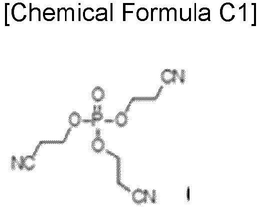

### Comparative Preparation Example 3

A rechargeable lithium battery cell was manufactured in the same manner as in Preparation Example 1 except that the tris(2-cyanoethyl)phosphate represented by Chemical Formula C1 was used in an amount of 1 part by weight.

Each additive composition of the electrolytes of Preparation Examples 1 to 4 and Comparative Preparation Examples 1 to 3 was shown in Table 1.

**(Table 1)**

| | Additive (parts by weight) | Other additives | | | |
|---|---|---|---|---|---|
| | | FEC (parts by weight) | LiBF₄ (parts by weight) | VEC (parts by weight) | PS (parts by weight) |
| Preparation Example 1 | Chemical Formula 1a 0.5 | 7 | 0.2 | 1 | 3 |
| Preparation Example 2 | Chemical Formula 1a 1.0 | 7 | 0.2 | 1 | 3 |
| Preparation Example 3 | Chemical Formula 2a 0.5 | 7 | 0.2 | 1 | 3 |
| Preparation Example 4 | Chemical Formula 2a 1.0 | 7 | 0.2 | 1 | 3 |
| Comparative Preparation Example 1 | - | 7 | 0.2 | 1 | 3 |
| Comparative | Chemical | 7 | 0.2 | 1 | 3 |
| Preparation Example 2 | Formula C1 0.5 | | | | |
| Comparative Preparation Example 3 | Chemical Formula C1 1.0 | 7 | 0.2 | 1 | 3 |

### Evaluation 1: Evaluation of CV Characteristics

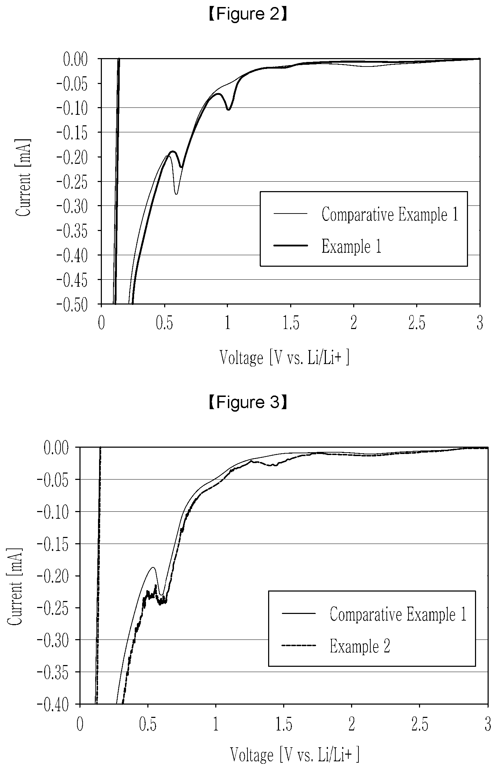

The electrolytes of Comparative Example 1 and Examples 1 and 2 were evaluated with respect to electrochemical stability in a cyclic voltammetry (CV) method, and the results are shown in FIGS. 2 and 3.

A graphite negative electrode as a working electrode and Li metal as a reference electrode and a counter electrode was used to manufacture a three electrode electrochemical cell, which was used to measure CV of the negative electrode. Herein, scanning was performed in 3 cycles from 3 V to 0 V from 0 V to 3 V at a scan speed of 0.1 mV/sec.

FIG. 2 is a graph showing the cyclic voltammetry (CV) results of the negative electrodes at room temperature of the electrolytes according to Example 1 and Comparative Example 1.

FIG. 3 is a graph showing the cyclic voltammetry (CV) results of the negative electrodes at room temperature of the electrolytes according to Example 2 and Comparative Example 1.

As shown in FIGS. 2 and 3, the electrolytes of Examples 1 and 2 including the additive according to the present invention were confirmed to exhibit a reduction decomposition peak at about 1.0 V or higher.

On the contrary, the electrolyte including no additive according to Comparative Example 1 exhibited no reduction decomposition peak at a lower potential.

This is an evidence that an electrolyte including the additive according to an embodiment interacted with a solvent at a relatively high reduction potential, and accordingly, the electrolytes of Examples 1 and 2 might be expected to form an initial SEI film on the negative electrodes over a wide voltage region before the solvent decomposition occurred during the charge process in which lithium ions were inserted into the negative electrodes. Accordingly, compared with the rechargeable lithium battery cell adopting the electrolyte of Comparative Example 1 forming no initial SEI film, the rechargeable lithium battery cells adopting the electrolytes according to Examples 1 and 2 of the present invention were expected to have excellent battery performance.

### Evaluation 2: Evaluation of High-temperature (45 °C) Cycle-life Characteristics

The rechargeable lithium battery cells according to Preparation Examples 1 to 4 and Comparative Preparation Examples 1 to 3 were constant current-charged to a voltage of 4.5 V at a current rate of 0.2 C and subsequently, cut off at a rate of 0.05 C, while maintaining 4.5 V in the constant voltage mode, at 25 °C. Subsequently, the cells were constant current-discharged to a voltage of 2.8 V at a rate of 0.2 C. Accordingly, each charge/discharge capacity was checked.

The rechargeable lithium battery cells were constant current-charged to a voltage of 4.5 V at a current rate of 1.5 C and subsequently, cut off at a rate of 0.05 C, while maintaining 4.5 V in a constant voltage mode, at 25 °C. Subsequently, the cells were constant current-discharged to 3.0 V at a rate of 0.5 C during the discharge (1^{st} cycle). This charge and discharge cycle was repeated to 100 cycles at 45 °C. In all the charge/discharge cycles, a pause of 10 minutes was provided after each charge/discharge cycle.

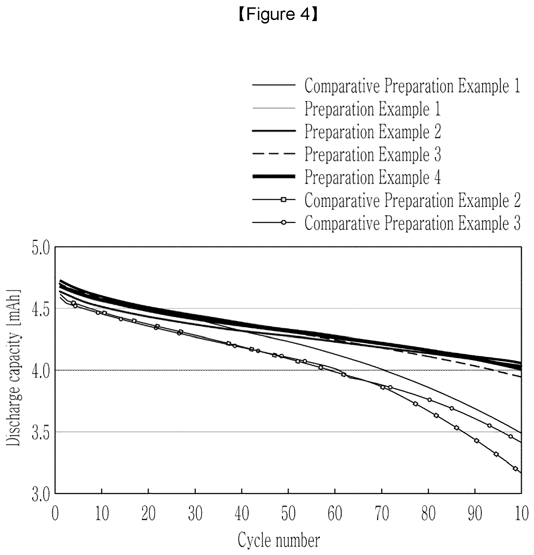

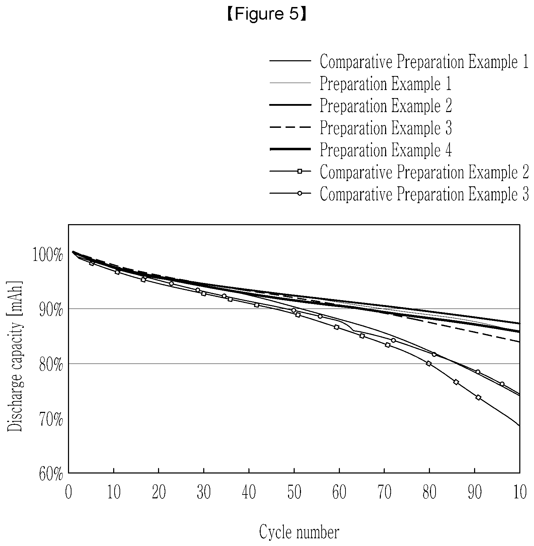

The charge/discharge experiment results are shown in FIGS. 4 and 5.

FIG. 4 is a graph showing the discharge capacity according to the cycle during high-temperature charge/discharge of the rechargeable lithium battery cells according to Preparation Examples 1 to 4 and Comparative Preparation Examples 1 to 3.

FIG. 5 is a graph showing capacity retention rates during high-temperature charge/discharge of the rechargeable lithium battery cells according to Preparation Examples 1 to 4 and Comparative Preparation Examples 1 to 3.

Referring to FIGS. 4 and 5, Preparation Examples 1 to 4 exhibited excellent high temperature cycle characteristics, compared with Comparative Preparation Examples 1 to 3.

### Evaluation 3: Overcharge Stability Evaluation

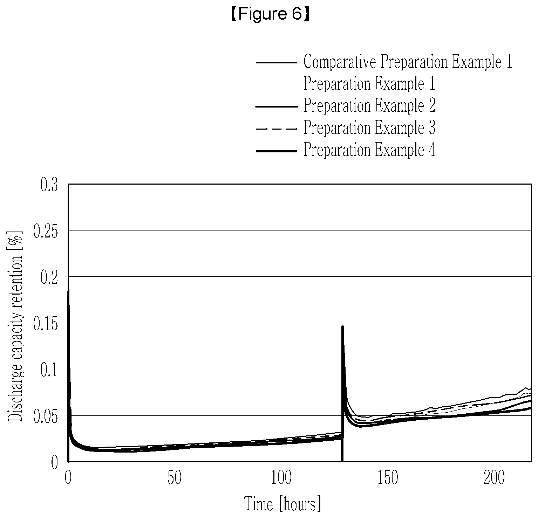

The rechargeable lithium battery coin half cells using a lithium metal as a negative electrode according to Preparation Examples 1 to 4 and Comparative Preparation Example 1 were charged to 4.5 V at a current of 0.2 C and discharged to 3.0 V at the same current of 0.2 C to proceed with formation. Subsequently, the cells were measured with respect to a leakage current by charging the cells to 4.6 V at a constant current of 0.2 C and then, measuring an amount of a current generated without maintaining the constant current, when the voltage of 4.6 V was maintained for 300 hours, and the results are shown in FIG. 6.

FIG. 6 is a graph showing the leakage current at high voltage measured for the rechargeable lithium battery cells according to Preparation Examples 1 to 4 and Comparative Preparation Example 1.

Referring to FIG. 6, Comparative Preparation Example 1 exhibited a large amount of leakage current at a high voltage, which confirmed a side reaction at the high voltage, but Preparation Examples 1 to 4 exhibited significant reduction of the leakage current. Accordingly, the electrolyte additive according to the present invention was confirmed to much improve stability at high voltages.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. An electrolyte additive represented by Chemical Formula 1 or Chemical Formula 2: 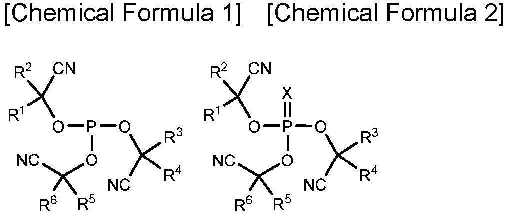 wherein, in Chemical Formula 1 and Chemical Formula 2,
X is O or S,
R¹ to R⁶ are each independently hydrogen, a cyano group, a halogen, a substituted or unsubstituted C1 to C10 alkyl group, or a substituted or unsubstituted C6 to C20 aryl group, and
at least one of R¹ and R², at least one of R³ and R⁴, and at least one of R⁵ and R⁶ is a substituted or unsubstituted C1 to C10 alkyl group, or a substituted or unsubstituted C6 to C20 aryl group.

2. The electrolyte additive as claimed in claim 1, wherein
R¹ or R², R³ or R⁴, and R⁵ or R⁶ is a substituted or unsubstituted C1 to C10 alkyl group, or a substituted or unsubstituted C6 to C20 aryl group.

3. The electrolyte additive as claimed in claim 1,
R¹ or R², R³ or R⁴, and R⁵ or R⁶ is a substituted or unsubstituted C1 to C6 alkyl group.

4. An electrolyte additive selected from the compounds listed in Group 1:

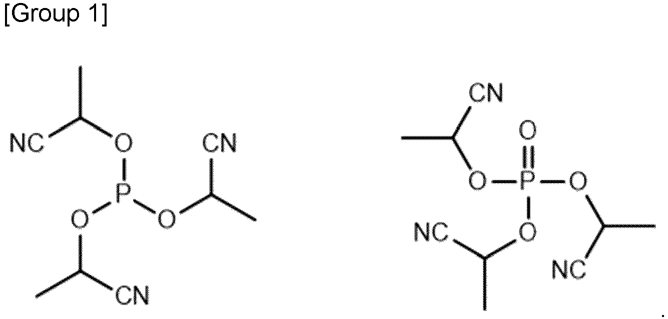

5. An electrolyte for a rechargeable lithium battery
non-aqueous organic solvent, lithium salt, and the electrolyte additive as claimed in claim 1.

6. The electrolyte for a rechargeable lithium battery as claimed in claim 5, wherein
the electrolyte additive is included in an amount of 0.1 to 5.0 parts by weight based on 100 parts by weight of the electrolyte for a rechargeable lithium battery.

7. The electrolyte for a rechargeable lithium battery as claimed in claim 5, wherein
the electrolyte additive is included in an amount of 0.1 to 2.0 parts by weight based on 100 parts by weight of the electrolyte for a rechargeable lithium battery.

8. The electrolyte for a rechargeable lithium battery as claimed in claim 5, wherein
the electrolyte further includes least one other additive selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexanetricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

9. A rechargeable lithium battery, comprising
a positive electrode including a positive electrode active material;
a negative electrode including a negative electrode active material; and
the electrolyte for a rechargeable lithium battery as claimed in any one of claim 5 to claim 8.

10. The rechargeable lithium battery as claimed in claim 9, wherein
the positive electrode active material is represented by Chemical Formula 3:
[Chemical Formula 3] LiₓM¹_{y}M²_{z}M³_{1-y-z}O_{2±a}Xₐ
wherein, in Chemical Formula 3,
0.5≤x≤1.8, 0≤a≤0.1, 0<y≤1, 0≤z≤1, 0<y+z≤1, M¹, M², and M³ each independently comprise at least one element selected from a metal of Ni, Co, Mn, Al, B, Ba, Ca, Ce, Cr, Fe, Mo, Nb, Si, Sr, Mg, Ti, V, W, Zr, or La, and a combination thereof, and X includes at least one element selected from F, S, P, or Cl.

11. The rechargeable lithium battery as claimed in claim 10, wherein
in Chemical Formula 3,
0.8≤y≤1, 0≤z≤0.2, and M¹ is Ni.

12. The rechargeable lithium battery as claimed in claim 9, wherein
the negative electrode active material comprises at least one of graphite and a Si composite.

13. The rechargeable lithium battery as claimed in claim 12, wherein
the Si composite comprises a core including Si particles and an amorphous carbon coating layer.

14. The rechargeable lithium battery as claimed in claim 13, wherein
the Si-based particles comprise at least one of silicon particles, Si-C composites, SiOₓ (0 < x ≤ 2), and a Si alloy.
